# EUROPEAN PATENT APPLICATION

(11) **EP 3 261 180 A1**
(43) Date of publication of application: **27.12.2017**
(21) Application number: 16275090.5
(22) Date of filing: 24.06.2016
(51) Int. Cl.: H01Q 21/06, H01Q 3/04, H01Q 1/28, H01Q 25/00, G01S 7/03, G01S 13/42, H01Q 1/42

(54) **AIRCRAFT RADAR ASSEMBLY**

(71) Applicant: BAE Systems PLC, London SW1Y 5AD (GB)
(72) Inventor: The designation of the inventor has not yet been filed
(74) Representative: BAE SYSTEMS plc Group IP Department

(57) **Abstract**

An aircraft radar assembly (200) comprising: a radome (202); a radar antenna (100) housed within the radome (202), the radar antenna (100) having a surface for transmitting and/or receiving radar waves; and rotation means (204) configured to rotate the radar antenna (100) within the radome (202) about an axis of rotation (206); wherein the surface is oblique to the axis of rotation (206).

## Description

### FIELD OF THE INVENTION

The present invention relates to aircraft radar assemblies.

### BACKGROUND

Many aircraft comprise radar systems for transmitting and/or receiving radar signals. For example, an aircraft may comprise a weather radar system.

Radar systems are usually installed in a radome on the aircraft. A radome may be located at the nose cone of the aircraft. A radome is a structural enclosure that protects the radar antenna from the surrounding environment and impacts. Radomes are constructed of material that minimally attenuates electromagnetic signals transmitted or received by the enclosed radar antenna.

### SUMMARY OF THE INVENTION

In a first aspect, the present invention provides an aircraft radar assembly comprising: a radome; a radar antenna housed within the radome, the radar antenna having a surface for transmitting and/or receiving radar waves; and rotation means configured to rotate the radar antenna within the radome about an axis of rotation. The surface is oblique to the axis of rotation.

The axis of rotation may be parallel to a longitudinal axis of the radome. The axis of rotation may be coincident with a longitudinal axis of the radome. The radar antenna may be elongate in a direction of the axis of rotation. The radar antenna may be elongate in a direction of a longitudinal axis of the radome. The surface may have bilateral symmetry. The axis of rotation may pass through a point along an axis of symmetry of the surface. The surface may be substantially planar, i.e. substantially flat, i.e. not curved. The surface may be hexagonal, or alternatively square, pentagonal, heptagonal, or octagonal.

The radar antenna may comprise a plurality of radar antenna elements disposed on the surface. Each radar antenna element may be configured to perform at least one of: transmit radar waves, and detect radar waves.

A width of at least a portion of the radar antenna may taper in a direction of a longitudinal axis of the radar antenna. The width of the radar antenna may taper outwards in a direction of a longitudinal axis of the radar antenna from a first end of the radar antenna to an intermediate portion of the radar antenna. The width of the radar antenna may taper inwards in a direction of the longitudinal axis of the radar antenna from the intermediate portion of the radar antenna to a second end of the radar antenna, the second end being opposite to the first end.

In a further aspect, the present invention provides an aircraft comprising an aircraft radar assembly according to any preceding aspect. The aircraft radar assembly may be located at a nose of the aircraft.

In a further aspect, the present invention provides a method comprising: providing a radome; locating a radar antenna within the radome, the radar antenna having a surface for transmitting and/or receiving radar waves; and rotating the radar antenna within the radome about an axis of rotation. The surface may be oblique to the axis of rotation.

### BRIEF DESCRIPTION OF THE DRAWINGS

Figure 1 is a schematic illustration (not to scale) of a top view of a radar antenna;
Figure 2 is a schematic illustration (not to scale) showing a side view cross section of an aircraft nose assembly;
Figure 3 is a schematic illustration (not to scale) showing a further side view cross section the aircraft nose assembly;
Figure 4 is a schematic illustration (not to scale) showing a front view cross section the aircraft nose assembly; and
Figure 5 is a schematic illustration (not to scale) showing the field-of-regard of the aircraft nose assembly.

### DETAILED DESCRIPTION

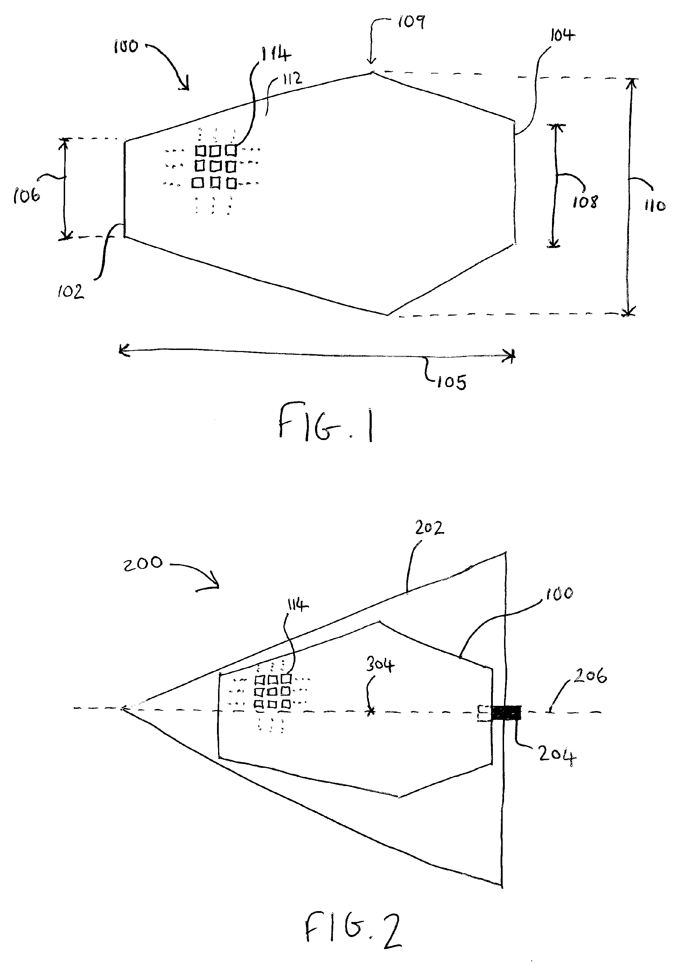

Figure 1 is a schematic illustration (not to scale) of a top view of an embodiment of a radar antenna 100.

In this embodiment, when viewed from above as in Figure 1, the radar antenna 100 has the shape of an elongated hexagon. The radar antenna 100 has a front, first end 102 and a rear, second end 104 opposite to the first end 102. Edges of the radar antenna 100 at the first and second ends 102, 104 are substantially parallel to each other. When viewed from above as in Figure 1, the radar antenna 100 has bilateral symmetry about an axis of symmetry that extends from the first end 102 to the second end 104 and is substantially perpendicular to the edges of the radar antenna 100 at the first and second ends 102, 104.

In this embodiment, the length of the radar antenna 100 between the first end 102 and the second end 104, which is indicated in Figure 1 by a double-headed arrow and the reference numeral 105, is 1.3m.

The width of the radar antenna 100 is the distance between opposite side edges of the radar antenna 100, the side edges extending between the first and second ends 102, 104. The width of the radar antenna 100 tapers outwards from the first end 102 to an intermediate portion 109, and then tapers inwards from the intermediate portion 109 to the second end 104. Thus, the width of the radar antenna 100 is at a maximum at the intermediate potion 109.

In this embodiment, the width of the radar antenna 100 at the first end 102, which is indicated in Figure 1 by a double-headed arrow and the reference numeral 106, is 0.3m.

In this embodiment, the width of the radar antenna 100 at the second end 104, which is indicated in Figure 1 by a double-headed arrow and the reference numeral 108, is 0.8m.

In this embodiment, the width of the radar antenna 100 at the intermediate portion 109, which is indicated in Figure 1 by a double-headed arrow and the reference numeral 110, is 0.83m

In this embodiment, the distance, along the length of the radar antenna 100, between the first end 102 and the intermediate portion is greater than the distance between the intermediate portion 109 and the second end 104 along the length of the radar antenna 100. In this embodiment, the distance between the first end 102 and the intermediate portion along the length of the radar antenna 100 is 1.0m.

In this embodiment, the surface area of the top surface of the radar antenna 100 is approximately 0.81 m². Also, the top surface of the radar antenna 100 is substantially flat or planar.

The radar antenna 100 comprises a support structure 112 and an array of radar antenna elements 114 disposed on the top surface of the support structure 112. Preferably, the array of radar antenna elements 114 covers all of the top surface of the support structure 112. The radar antenna elements 114 are spaced apart from each other on the top surface of the support structure 112. The radar antenna elements 114 are arranged in a grid pattern on the top surface of the support structure 112.

In some embodiments, the support structure 112 is made of aircraft grade metal such as aircraft grade aluminium. The radar antenna elements 114 may include, for example, Gallium Arsenide or Gallium Nitride radar antenna elements.

In this embodiment, the radar antenna elements 114 are configured to transmit radar waves at a predetermined frequency or frequency bandwidth. Control of the radar antenna elements 114 to transmit radar waves may be performed by a controller (not shown in the Figures) operatively coupled to the radar antenna 100.

Also, the radar antenna elements 114 are configured to receive incident radar waves having a predetermined frequency or within a predetermined frequency bandwidth, for example a frequency or frequency range substantially equal to that of a radar wave transmitted by the radar antenna 100. The radar antenna elements 114 are further configured to send a signal corresponding to received radar wave to a signal processor (not shown in the Figures) operatively coupled to the radar antenna 100.

In this embodiment, the radar antenna 100 is an Active Electronically Scanned Array (AESA). The radar antenna elements 114 may be operated as a phased array to provide electronic beam steering.

In some embodiments, the radar antenna elements 114 are tunable such that the wavelength of transmitted and/or received radar waves may be varied.

Figure 2 is a schematic illustration (not to scale) showing a side view cross section of an embodiment of an aircraft nose assembly 200, which comprises the radar antenna 100. Figure 2 shows a side aspect of the radar antenna 100.

In this embodiment, the aircraft nose assembly 200 comprises a radome 202, the radar antenna 100, and a rotary actuator 204.

The radome 202 is constructed of an electrically transparent material that minimally attenuates electromagnetic signals transmitted and/or received by the radar antenna 100.

The radar antenna 100 is wholly housed within the radome 202. The radar antenna 100 is coupled to the radome 202 via the rotary actuator 204.

The rotary actuator 204 is coupled to the radar antenna 100 at or proximate to the second end 104, also either to the radome 202 or an aircraft to which the radome 202 is fixed.

The rotary actuator 204 is configured to rotate the radar antenna 100 within the radome 202 about an axis of rotation 206, which is indicated in the Figures by a dotted line and the reference numeral 206. The rotary actuator 204 and the radar antenna 100 are configured to allow the rotary actuator 204 to rotate the radar antenna 100 within the radome 202 about an axis of rotation 206 through 360°. However, in some embodiments, only less than 360° rotation of the antenna 100 is permitted or is possible, for example, in some embodiments, the radar antenna 100 can be rotated through only up to 180°. The rotary actuator 204 and antenna 100 are further configured to provide for movement to a fixed angular position of the radar antenna 100 relative to the radome 202.

In this embodiment, the axis of rotation 206 is substantially coincident with a longitudinal axis of the radome 202 (i.e. a longitudinal axis of the aircraft nose assembly 200), which may, for example, be coincident with a longitudinal or roll axis of an aircraft when the radome 202 is fixed to an aircraft.

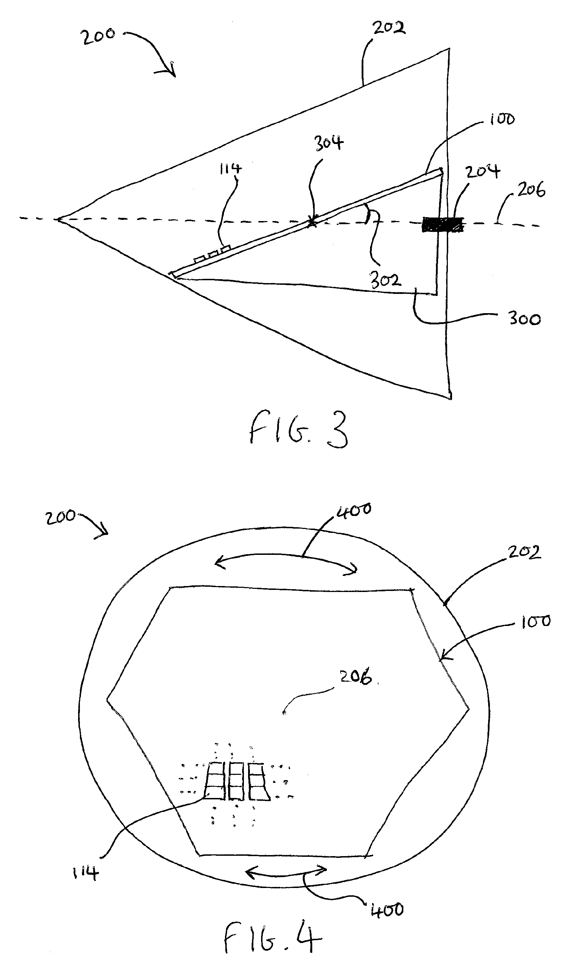

Figure 3 is a schematic illustration (not to scale) showing a side view cross section of this embodiment of the aircraft nose assembly 200. Figure 3 shows the radar antenna 100 at a different angular position relative to the radome 202 to that shown in Figure 2. In particular, compared to its position in Figure 2, the radar antenna 100 in Figure 3 has been rotated by 90° about the axis of rotation 206.

In this embodiment, the radar antenna 100 is mounted to a substantially wedge shaped base portion 300. The base portion 300 may be made of a lightweight, strong material such as a carbon or glass fibre composite material. The base portion 300 has a relatively thick rear end to which the second end 104 of the radar antenna is mounted. The base portion 300 tapers to nothing at its forward end to which the first end 102 of the radar antenna 100 is mounted.

The rotary actuator 204 is attached to the rear end of the base portion 300, and is configured to rotate the assembly comprising the base portion 300 and the radar antenna 100 about the axis of rotation 206.

In this embodiment, the transmit and receive surface (i.e. the top surface) of the radar antenna 100 is oblique (i.e. neither parallel nor perpendicular) to the axis of rotation 206. For example, the top surface of the radar antenna 100 may be positioned at an angle of between 20° and 40° (for example, 20°, 25°, 30°, 35°, or 40°) relative to the axis of rotation 206 such that the radar antenna elements 114 are directed both forwards from the radome 202 and to a side of the radome 202. This angle is indicated in Figure 3 by the reference numeral 302 and in this embodiment, the angle 302 is 25°.

In this embodiment, the axis of rotation 206 passes through the top surface of the radar antenna 100 at a point indicated in Figures 2 and 3 by an 'x' and the reference numeral 304. This point 304 is located along the axis of symmetry of the top surface of the radar antenna 100, and is between 30% and 80% (such as 30%, 40%, 50%, 60%, 70%, or 80%), or between 40% and 60%, along the length of the radar antenna 100 from the first end 102. Thus, in this embodiment, the point 304 is between 0.39m and 1.04m from the first end 102 in the direction of the second end 104.

Figure 4 is a schematic illustration (not to scale) showing a front view cross section of the aircraft nose assembly 200. Figure 4 shows a frontal aspect of the radar antenna 100.

Example rotation of the radar antenna 100 about the axis of rotation is indicated in Figure 4 by double headed arrows and the reference numeral 400.

In this embodiment, the frontal aspect projected area (i.e. the area of the top surface of the radar antenna 100 when the assembly 200 is viewed from the front, as in Figure 4) is approximately 0.34m².

Also, in this embodiment, the maximum side aspect projected area (i.e. the area of the top surface of the radar antenna when the assembly 200 is viewed from the side and the radar antenna 100 is oriented to face that side) is approximately 0.73m².

Advantageously, the radar antenna 100 being oblique to the axis of rotation 206 (and the longitudinal axis of the radome 202) means that, in operation, radar waves can be transmitted both forward from the aircraft nose assembly 200, and also from the sides of the aircraft nose assembly 200 as the radar antenna 100 is rotated.

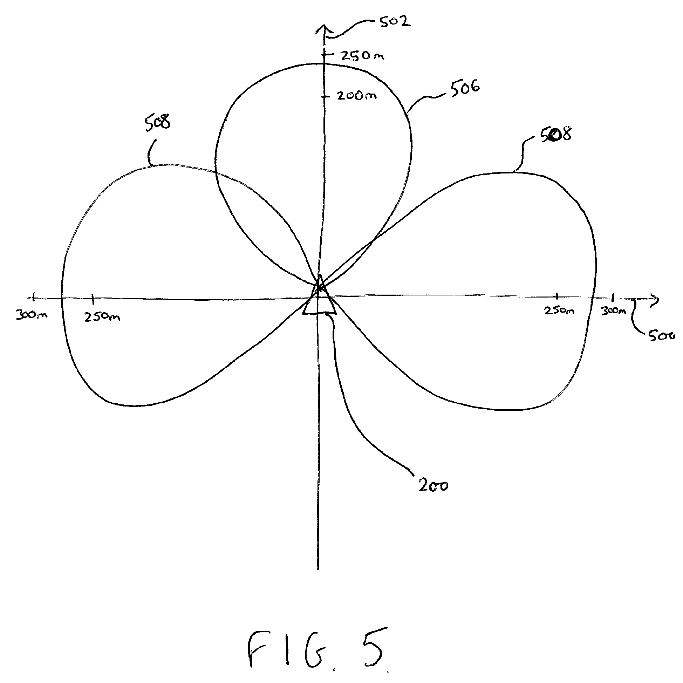

Figure 5 is a schematic illustration (not to scale) showing a top down view of the antenna field of regard of the aircraft nose assembly 200.

An x-axis representing a distance perpendicular to the longitudinal axis aircraft nose assembly 200 is indicated in Figure 5 by the reference numeral 500. A y-axis representing a distance parallel to the longitudinal axis aircraft nose assembly 200 is indicated in Figure 5 by the reference numeral 502.

In this embodiment, the radar field of regard comprises a forward field of view 506 and a side field of view 508.

In this embodiment, the forward field of view 506 is substantially the same irrespective of the angular position of the radar antenna about the axis of rotation 206 with respect to the radome 202. In this embodiment, the forward field of view 506 is substantially independent of the angle 400 about the axis of rotation 206.

The direction of the side field of view 508 with respect to the radome 202 depends on the angular position of the radar antenna about the axis of rotation 206 with respect to the radome 202. In particular, the side view 508 of radar antenna is directed in the direction that the radar antenna 100 is facing and may be changed by varying the angle 400 (i.e. by rotating the radar antenna 100 about the axis of rotation 206). Although Figure 5 shows two opposite side field of views 508 simultaneously, it will be appreciated that, in this embodiment, only one such view 508 is achievable at a given time, the achievable side view 508 being in the direction in which the radar antenna 100 is facing.

The forward field of view 506 represents radiation emitted by the radar antenna elements 114 from the aircraft nose assembly 200 in the forward direction, i.e. in the direction of the y-axis 502. The forward field of view 506 represents radar waves transmitted from the frontal aspect of the radar antenna 100 as shown in Figure 4.

As the radar antenna 100 is rotated about the axis of rotation 206 by the rotary actuator 204, the frontal aspect of the radar antenna 100 sweeps through a circle, with the largest dimension (i.e. a maximum diameter) defined by the second end of the antenna 104. In this embodiment, this maximum diameter is 1.04m. Surprisingly, the forward facing performance of the radar antenna 100 (i.e. the forward field of view 506) tends to be improved compared to a fixed forward facing radar antenna having an area equal to the forward projected area of the radar antenna 100. This tends to be because the top surface of the radar antenna is relatively large compared to such a forward facing fixed radar antenna. Thus, the top surface of the radar antenna 100 contains a larger number of radar antenna elements 114 than can fit into such a forward facing fixed radar antenna. The increased power output from the increased number of radar antenna elements 114 advantageously tends to provide for improved forward performance compared to a fixed forward facing antenna of similar size.

In this embodiment, the effective range of the radar antenna 100 along the y-axis is between 200km and 250km. This tends to be achievable using a transmit power of approximately 12W per radar antenna element 114, and a total transmit power of approximately 31 kW.

The side fields of view 508 represents radiation emitted by the radar antenna elements 114 from a side of the aircraft nose assembly 200, i.e. in the direction of the x-axis 500. The forward field of view 506 represents radar waves transmitted from the frontal aspect of the radar antenna 100 as shown in Figure 4.

In this embodiment, the effective range of the radar antenna 100 along the x-axis is between 250km and 350km. This tends to be achievable using a transmit power of approximately 12W per radar antenna element 114, and a total transmit power of approximately 31 kW.

By changing the angle 302 of the radar antenna 100 with respect to the axis of rotation 206, how transmitted radar energy is proportioned between the forward and sideways directions 502, 500 can be varied. Advantageously, the angle 302 being between 20° and 40° (and more preferably 20°) tends to provide good performance of the radar antenna 100 in both forward and sideways directions 502, 500.

Advantageously, the angle 302 being between 20° and 40° tends to provide that there is little or no shadowing of the radar antenna elements 114 by each other.

In the above embodiments, the top surface of the radar antenna is elongate and hexagonal. However, in other embodiments, the radar antenna has a difference shape.

In the above embodiments, the top surface of the radar antenna is flat, i.e. planar. However, in other embodiments, the radar antenna is not flat, i.e. non-planar. For example, the radar antenna may have a curved surface.

In the above embodiments, the dimensions of the radar antenna are as described above. However, in other embodiments, one or more of the dimensions of the radar antenna is different to that described above.

In the above embodiments, the radar antenna is configured to both transmit and receive radar waves. However, in other embodiments, the radar antenna is configured to either only transmit radar waves or only receive radar waves.

In the above embodiments, the top surface of the radar antenna is at an angle of between 20° and 40° relative to the axis of rotation. However, in other embodiments, the top surface of the radar antenna is at a different angle (i.e. less than 20° or greater than 40°) to the axis of rotation.

In the above embodiments, the axis of rotation passes through the top surface of the radar antenna at a point that is located along the axis of symmetry of the top surface of the radar antenna, and is between 30% and 80%, or between 40% and 60%, along the length of the radar antenna from the first end. However, in other embodiments, the axis of rotation does not pass through the top surface of the radar antenna at such a point. For example, the axis of rotation may pass through the top surface of the radar antenna at a different point.

## Claims

1. An aircraft radar assembly (200) comprising:
a radome (202);
a radar antenna (100) housed within the radome (202), the radar antenna (100) having a surface for transmitting and/or receiving radar waves; and
rotation means (204) configured to rotate the radar antenna (100) within the radome (202) about an axis of rotation (206); wherein
the surface is oblique to the axis of rotation (206).

2. An aircraft radar assembly (200) according to claim 1, wherein the axis of rotation (206) is parallel to a longitudinal axis of the radome (202).

3. An aircraft radar assembly (200) according to claim 1 or 2, wherein the axis of rotation (206) is coincident with a longitudinal axis of the radome (202).

4. An aircraft radar assembly (200) according to any of claims 1 to 3, wherein the radar antenna (100) is elongate in a direction of the axis of rotation (206).

5. An aircraft radar assembly (200) according to any of claims 1 to 4, wherein the radar antenna (100) is elongate in a direction of a longitudinal axis of the radome (202).

6. An aircraft radar assembly (200) according to any of claims 1 to 5, wherein the surface has bilateral symmetry.

7. An aircraft radar assembly (200) according to any of claims 1 to 6, wherein the axis of rotation (206) passes through a point along an axis of symmetry of the surface.

8. An aircraft radar assembly (200) according to any of claims 1 to 7, wherein the surface is substantially planar.

9. An aircraft radar assembly (200) according to any of claims 1 to 8, wherein the radar antenna (100) comprises a plurality of radar antenna elements (114) disposed on the surface, each radar antenna element (114) being configured to perform at least one of: transmit radar waves, and detect radar waves.

10. An aircraft radar assembly (200) according to any of claims 1 to 9, wherein a width of at least a portion of the radar antenna (100) tapers in a direction of a longitudinal axis of the radar antenna (100).

11. An aircraft radar assembly (200) according to any of claims 1 to 10, wherein:
a width of the radar antenna (100) tapers outwards in a direction of a longitudinal axis of the radar antenna (100) from a first end (102) of the radar antenna (100) to an intermediate portion (109) of the radar antenna (100); and
the width of the radar antenna (100) tapers inwards in a direction of the longitudinal axis of the radar antenna (100) from the intermediate portion (109) of the radar antenna (100) to a second end (104) of the radar antenna (100), the second end (104) being opposite to the first end (102).

12. An aircraft radar assembly (200) according to any of claims 1 to 10, wherein the surface is hexagonal.

13. An aircraft comprising an aircraft radar assembly (200), the aircraft radar assembly (200) according to any of claims 1 to 12.

14. An aircraft according to claim 13, wherein the aircraft radar assembly (200) is located at a nose of the aircraft.

15. A method comprising:
providing a radome (202);
locating a radar antenna (100) within the radome (202), the radar antenna (100) having a surface for transmitting and/or receiving radar waves; and
rotating the radar antenna (100) within the radome (202) about an axis of rotation (206); wherein:
the surface is oblique to the axis of rotation (206).
